(19) Europäisches Patentamt

European Patent Office

Office européen des brevets

(11) Veröffentlichungsnummer: **0 606 419 B1**

(12) **EUROPÄISCHE PATENTSCHRIFT**

(45) Veröffentlichungstag der Patentschrift: **02.11.95**

(21) Anmeldenummer: **93912565.4**

(22) Anmeldetag: **05.06.93**

(86) Internationale Anmeldenummer:
**PCT/DE93/00488**

(87) Internationale Veröffentlichungsnummer:
**WO 94/02763 (03.02.94 94/04)**

(51) Int. Cl.⁶: **F16K 1/32**, F16K 25/00,
F16K 27/02

(54) **VENTILOBERTEIL.**

(30) Priorität: **17.07.92 DE 4223589**

(43) Veröffentlichungstag der Anmeldung:
**20.07.94 Patentblatt 94/29**

(45) Bekanntmachung des Hinweises auf die
Patenterteilung:
**02.11.95 Patentblatt 95/44**

(84) Benannte Vertragsstaaten:
**AT BE CH DE DK ES FR GB GR IT LI NL PT SE**

(56) Entgegenhaltungen:
**CH-A- 543 023        DE-A- 4 025 654
DE-B- 1 295 938        DE-U- 1 827 237
DE-U- 8 524 528        US-A- 4 064 904**

(73) Patentinhaber: **Flühs Drehtechnik GmbH.
Lösenbacher Landstrasse 2
D-58515 Lüdenscheid (DE)**

(72) Erfinder: **LANGE, Peter
Teutonenstra e 80 b
D-5880 Lüdenscheid (DE)**
Erfinder: **ZIEBACH, Helmut
Lindenhof 11
D-5880 Lüdenscheid (DE)**

(74) Vertreter: **Dörner, Lothar, Dipl.-Ing.
Stresemannstrasse 15
D-58095 Hagen (DE)**

## Beschreibung

Die Erfindung betrifft ein Ventiloberteil für Armaturen, bei dem in einem Kopfstück ein axial bewegbarer Ventilkolben und eine drehbare Spindel geführt sind, die über ein Gewinde miteinander verbunden sind, bei dem zur Axialführung an dem Ventilkolben und in dem Kopfstück ineinandergreifende Vielkante und zur Begrenzung der Axialbewegung ein Anschlag vorgesehen sind, und bei dem von dem Kopfstück ein Dichtring gehalten ist, der über die dem Zulauf zugewandte Stirnseite des Kopfstücks vorsteht und an der vorstehenden äußeren Stirnseite als Fläche für ihre ruhende Anlage an einem Ventilsitz der Armatur ausgebildet ist.

Mit Hilfe von Ventiloberteilen wird z.B. der Wasseraustritt aus Sanitärarmaturen gesteuert. Zu diesem Zweck wird das Ventiloberteil mittels seines Kopfstücks in das Gehäuse der Sanitärarmatur geschraubt; auf seine Spindel wird ein Drehgriff oder ein Hebel gesteckt.

Ein Ventiloberteil der eingangs genannten Art ist bekannt (vgl. US-PS 40 64 904). Das bekannte Ventiloberteil weist für die Führung des Ventilkolbens in dem Kopfstück zwei gegenüberliegende Flächen auf. Die Begrenzung der Axialbewegung des Ventilkolbens erfolgt mittels eines Rings, der in dem Kopfstück gehalten ist, mit einem Vorsprung über die äußere Stirnseite vorsteht und in einen Drehgriff hineinragt, an den ein radial nach innen gerichteter Vorsprung angeformt ist. Bei dem bekannten Ventiloberteil ist der Anfahrpunkt des Ventilkolbens an die Dichtung nur ungenau zu fixieren. Nachteilig ist weiterhin, daß für die Begrenzung der Axialbewegung der Drehgriff benötigt wird, was nur die Verwendung bestimmter Drehgriffe ermöglicht und somit den Einsatz des Ventiloberteils begrenzt.

Hier will die Erfindung Abhilfe schaffen. Der Erfindung liegt die Aufgabe zugrunde, ein Ventiloberteil der eingangs genannten Art so auszubilden, daß sich der Anfahrpunkt des Ventilkolbens an die Dichtung genau fixieren läßt, die überdies als geometrisch einfach gestaltete Dichtung, z. B. mit rundem oder eckigem Querschnitt, ausgebildet sein kann. Diese Aufgabe wird erfindungsgemäß dadurch gelöst, daß die axiale Bewegung des Ventilkolbens von einem innen in dem Kopfstück und von einem außen an der Spindel in derselben Querschnittsebene angeordneten Anschlag in beiden Richtungen begrenzt ist, und daß der Innenvielkant des Kopfstücks und der Außenvielkant des Ventilkolbens von Zähnen gebildet ist, die in der Stirnansicht als gleichschenklige Dreiecke ausgebildet sind.

Einen Vielkant für die Führung eines Ventilkegels in einem Ventilkörper im Querschnitt dreieckig auszubilden, ist an sich bekannt (vgl. DE-GM 18 27 237).

Der Innenvielkant an dem Kopfstück und der in diesem Innenvielkant eingreifende Außenvielkant an dem Ventilkolben sind für die Axialführung des Ventilkolbens zur Vermeidung von Verdrehungen und für die genaue Fixierung seines Anfahrpunktes an den Dichtring vorgesehen, der über die dem Zulauf zugewandte Stirnseite des Kopfstücks vorsteht. Die Axialbewegung des Ventilkolbens in Richtung dieser Stirnseite und damit eines Ventilsitzes der Armatur ist durch den Anschlag begrenzt, der einerseits durch eine Anschlagfläche an der Spindel, andererseits durch eine Anschlagfläche in dem Kopfstück gebildet ist. Die Anschlagflächen kommen beim Drehen der Spindel in Schließrichtung zur Anlage. Die Anlagestellung ist die Schließstellung des Ventiloberteils. Bei einer Zahl m der Zähne des Vielkants und bei einer Steigung n des Bewegungsgewindes zwischen Ventilkolben und Spindel ist die Genauigkeit, mit der sich der Anfahrpunkt des Ventilkolbens an die Dichtung fixieren läßt, das Verhältnis $m/n$. Auch in entgegengesetzter Richtung, also beim Rückhub, ist die Axialbewegung des Ventilkolbens durch den Anschlag begrenzt, nähmlich durch Gegen-Anschlagflächen in der Spindel und im Kopfstück. Es ist vorteilhaft, die Anschläge so zu wählen, daß der Drehwinkel der Spindel etwa 270° beträgt. Mittels einer Stellschraube und eines Anschlagstifts in der Spindel läßt sich dann der Drehwinkel der Spindel auf beliebige Winkel unter 270° einstellen.

Ausgestaltungen und Weiterbildungen der Erfindung sind in den Unteransprüchen angegeben. Ein Ausführungsbeispiel der Erfindung ist in der Zeichnung dargestellt und wird im folgenden näher beschrieben. Es zeigen:

Fig. 1 ein mit einer Sanitärarmatur verbundenes Ventiloberteil im vergrößerten Längsschnitt, wobei die eine Hälfte das Ventiloberteil in geschlossenem, die andere in geöffnetem Zustand zeigt;

Fig. 2 die Spindel des Ventiloberteils
    a) in Seitenansicht, ausschnittsweise im Längsschnitt;
    b) in einem Horizontalschnitt entlang Schnittlinie B-B;
    c) in einer gegenüber a) um 90° verdrehten Seitenansicht;

Fig. 3 den Ventilkolben des Ventiloberteils in einer Hälfte im Längsschnitt, in der anderen Hälfte in Seitenansicht;

Fig. 4 das Kopfstück des Ventiloberteils
    a) in einem Schnitt entlang Schnittlinie A-A;
    b) in einer Hälfte im Längsschnitt, in der anderen Hälfte in Seitenansicht;
    c) in einer Stirnansicht.

Das als Ausführungsbeispiel gewählte Ventiloberteil weist im wesentlichen drei miteinander verbundene und gegeneinander geführte Teile auf, nämlich ein Kopfstück 1, eine das Kopfstück 1 mittig durchsetzende und in ihm radial geführte Spindel 2 sowie einen auf die Spindel 2 geschraubten und im Kopfstück 1 axial geführten Ventilkolben 3.

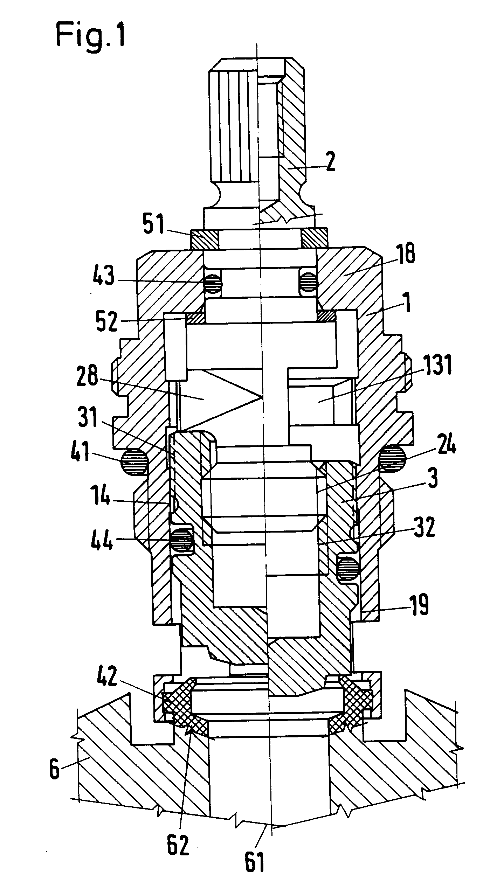

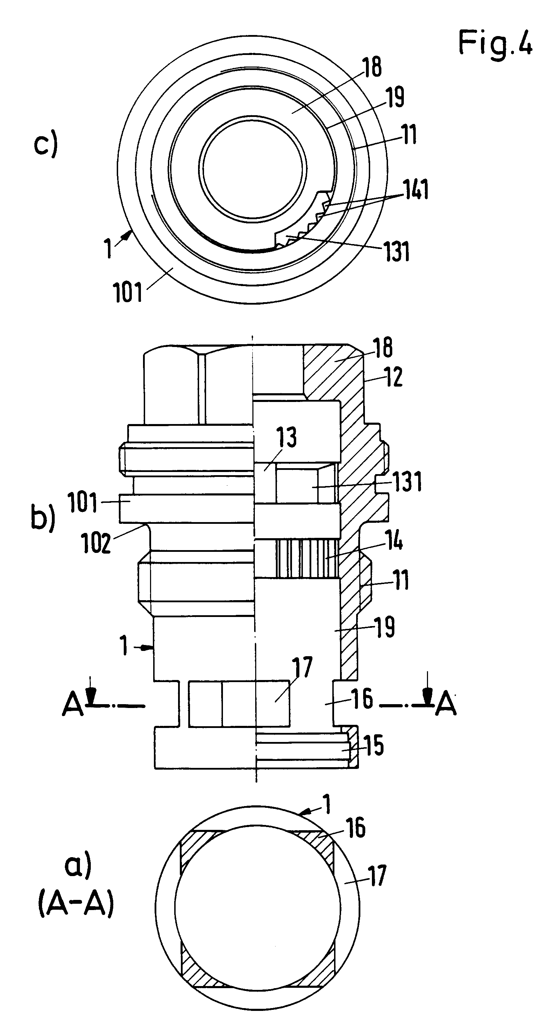

Das Kopfstück 1 besteht aus einem symmetrischen Hohlkörper, dessen beide Stirnflächen offen sind - vgl. Fig. 1 und 4 -. Etwa mittig weist das Kopfstück 1 ein Außengewinde 11 auf, mit dem es in das Gehäuse einer nur mit einem Teil eines Wasserzulaufkanals dargestellten Sanitärarmatur 6 schraubbar ist. Das Einschrauben des Kopfstücks 1 in die Sanitärarmatur 6 erfolgt mittels Schlüsselflächen 12, die im Bereich der äußeren Stirnseite außen an dem Kopfstück 1 vorgesehen sind. Im Bereich dieser Stirnseite ist das Kopfstück 1 mit einem eingezogenen Rand 18 versehen, an dem die Spindel 2 axial abgestützt und radial geführt ist.

An den Rand 18 schließt ein hohlzylindrischer Teil 19 an. Im Abstand von dem Rand 18 ist in dem hohlzylindrischen Teil 19 ein Innenring 13 vorgesehen, dessen Innendurchmesser nur geringfügig kleiner ist als der des hohlzylindrischen Teils 19. Von dem Innenring 13 ragt ein teilringförmiger Anschlag 131 radial in den Hohlraum des Kopfstücks 1. Der Anschlag 131 dient der Begrenzung der Drehbewegung der Spindel 2 und damit - in noch zu beschreibender Weise - der Axialbewegung des Ventilkolbens 3. Im Abstand von dem Innenring 13 ist auf der dem eingezogenen Rand 18 abgewandten Seite ein Innenvielkant 14 in den hohlzylindrischen Teil 19 eingearbeitet. Der Innenvielkant 14 ist von einer Vielzahl von Zähnen 141 gebildet, die in der Stirnansicht nach Art von gleichschenkligen Dreiecken ausgebildet sind. Wären die Zähne 141 über den gesamten Umfang des hohlzylindrischen Teils 19 gleichmäßig verteilt, wären im Ausführungsbeispiel 40 Zähne 141 vorgesehen. Zur Vereinfachung der Fertigung sind die Zähne 141 aber nur über einen Teil, vorzugsweise über ein Viertel des Umfangs verteilt. Der Vielkant 14 ist für die Axialführung des Ventilkolbens 3 zur Vermeidung von Verdrehungen und für die genaue Fixierung seines Anfahrpunktes an eine Dichtung 42 vorgesehen.

Auf der Wasserzulaufseite ist im Anschluß an den Vielkant 14 die Zylinderfläche 19 des Kopfstücks verlängert, die in diesem Teil ebenfalls der Führung und der Abdichtung des Ventilkolbens 3 zu einem noch zu beschreibenden Bewegungsgewinde dient. In diese Zylinderfläche 19 ist im Abstand von der zugewandten Stirnseite eine Innenringnut 15 eingelassen, die den Dichtring 42 aufnimmt. Dieser Dichtring 42 kann kreisförmigen, rechteckigen oder lippenförmigen Querschnitt haben, also herkömmlich sein. Auf der dieser Stirnseite des Kopfstücks 1 abgewandten Seite der Innenringnut 15 sind in dem Kopfstück 1 Fenster 17 für den Wasserdurchtritt vorgesehen, die in derselben Querebene symmetrisch verteilt in seiner Wandung ausgespart sind. Im Ausführungsbeispiel sind 4 Fenster 17 vorgesehen. Sie sind gebildet von 4 Längsstegen 16, von denen jeder einen nach außen abnehmenden etwa trapezförmigen Querschnitt mit abgerundeten, Innen- und Außendurchmesser der zylindrischen Wandung des Kopfstücks entsprechenden Grundseiten aufweist. Außen weist das Kopfstück 1 etwa in Höhe zwischen Innenring 13 und Innenvielkant 14 einen Außenflansch 101 auf, mit dem das Kopfstück 1 nach dem Einschrauben auf dem Gehäuse der Sanitärarmatur aufliegt. Der Außenflansch 101 weist auf seiner dem Außengewinde 11 zugewandten Seite eine Ringnut 102 für die Aufnahme eines Dichtrings 41 auf. Dieser Dichtring 41 ist nach dem Einschrauben des Ventiloberteils zwischen dem Kopfstück 1 und der Sanitärarmatur 6 angeordnet.

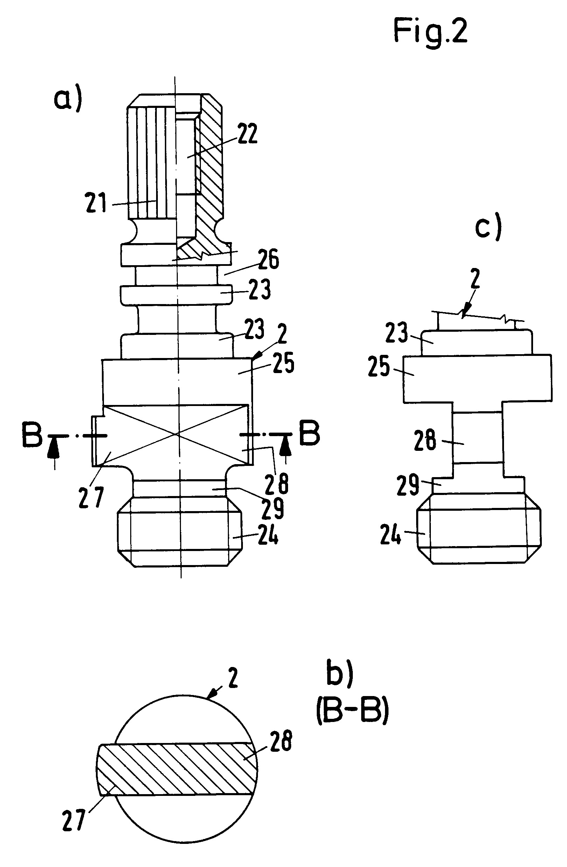

Die Spindel 2 ist im wesentlichen massiv ausgeführt - vgl. Fig. 1 und 2 -. Sie ist an ihrer einen Stirnseite außen als Vielkant 21 ausgeführt und innen mit einem Sackloch 22 mit Innengewinde versehen, die einen Steckkopf für die Befestigung eines nicht dargestellten Drehgriffs oder Hebels bilden. Im Abstand von dem Steckkopf ist außen an der Spindel 2 eine Ringfläche 23 vorgesehen, mit der die Spindel 2 an dem Rand 18 des Kopfstücks 1 radial geführt ist. Die Ringfläche 23 ist von einer Ringnut unterbrochen, die einen Dichtring 43 aufnimmt. Auf der dem Vielkant 21 entgegengesetzten Seite ist die Spindel 2 außen mit einem den einen Teil eines Bewegungsgewindes 24, 32 darstellenden Außengewinde 24 versehen. Im Anschluß an die Ringfläche 23 ist auf der dem Außengewinde 24 zugewandten Seite ein Flansch 25 vorgesehen, der unter Zwischenfügung einer Gleitscheibe 51 innen an dem Rand 18 des Kopfstücks 1 anliegt und den bei Betätigung der Spindel 2 auftretenden Axialdruck aufnimmt. Auf der dem Vielkant 21 zugewandten Seite ist ein Einstich 26 vorgesehen, der einen Sicherungsring 52 aufnimmt, der außen auf dem Rand 18 liegt. Der Bereich zwischen dem Flansch 25 und dem Außengewinde 24 ist nach Art eines Stegs 28 ausgebildet. Der Steg 28 ist in der Stirnansicht der Spindel 2 exzentrisch ausgebildet. Radial bildet sein eines Ende die Verlängerung des Flansches 25. Sein anderes Ende steht über den Flansch 25 vor und bildet einen mit dem Innenanschlag 131 im Kopfstück 1 zusammenwirkenden Außenanschlag 27. Der Übergang zwischen dem Steg 28 und dem Außengewinde 24 ist nach Art eines Tellers 29 geringeren Durchmessers ausgebildet.

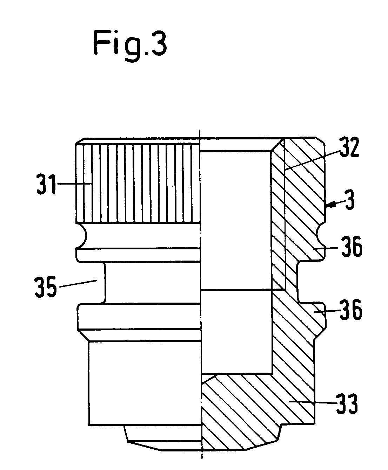

Der Ventilkolben 3 weist - vgl. Fig. 1 und 3 - an seiner einen Stirnseite eine Außenvielkant 31, mit dem der Ventilkolben 3 in dem Innenvielkant 14 des Kopfstücks 1 axial geführt ist, und ein den anderen Teil des Bewegungsgewindes darstellendes Innengewinde 32 auf, in das das Außengewinde 24 der Spindel 2 geschraubt ist. Der Außenvielkant 31 ist - wie der Innenvielkant 14 des Kopfstücks 1 - von einer Vielzahl von Zähnen gebildet, im Ausführungsbeispiel von 40 Zähnen, die in der Stirnansicht als gleichschenklige Dreiecke ausgebildet sind. Eine Drehung der Spindel 2 mittels des nicht dargestellten Drehgriffs wird über das Bewegungsgewinde 24, 32 sowie den Außenvielkant 31 und den Innenvielkant 14 in eine Axialbewegung des Ventilkolbens 3 umgewandelt. Bei dieser Axialbewegung hebt oder senkt sich die dem Wasserzulauf zugewandte Stirnseite des Ventilkolbens 3 bezogen auf den Dichtring 42, der in der Innenringnut 15 des Kopfstücks 1 gehalten ist und an einem in einem Wasserzulauf 61 der Sanitärarmatur 6 vorgesehenen Ventilsitz 62 anliegt. Die Dichtung erfolgt durch den hydrostatischen Druck. Bei dieser Axialbewegung wird der Ventilkolben 3 außerdem mittels eines im Anschluß an den Außenvielkant 31 angeformten Außenflansches 36 einerseits und der Zylinderfläche 19 in dem Kopfstück 1 andererseits geführt. In dem Außenflansch 36 ist eine Ringnut 35 für die Aufnahme eines Dichtrings 44 vorgesehen. Der Dichtring 44 bewirkt, daß das Bewegungsgewinde 24, 32 im abgedichteten Bereich liegt. Für den Betrieb des Bewegungsgewindes 24, 32 notwendiges Fett bleibt unberührt vom Wasser.

Die Axialbewegung des Ventilkolbens 3 in Richtung des Ventilsitzes 62 ist durch den Anschlag 27 am Steg 28 der Spindel 2 im Zusammenwirken mit dem Anschlag 131 an dem Innenring 13 des Kopfstücks 1 begrenzt. Die Anschläge 27, 131 kommen beim Drehen der Spindel 2 in Schließrichtung zur Anlage. Die Anlagestellung der Anschläge 27, 131 ist die Schließstellung des Ventiloberteils. Bedingt durch die Vielzahl der Zähne des Außenvielkants 31, im Ausführungsbeispiel 40 Zähne, und die Steigung des Bewegungsgewindes 24, 32, im Ausführungsbeispiel 2 mm, läßt sich der Anfahrpunkt des Ventilkolbens 3 an die Dichtung 42 sehr genau fixieren. Bei einer Steigung m und einer Zähnezahl n beträgt die Genauigkeit im Ausführungsbeispiel m/n = 2 mm/40 = 0,05 mm.

Auch in entgegengesetzter Richtung - Rückhub - ist die Axialbewegung des Ventilkolbens 3 durch den Anschlag 27 am Steg 28 der Spindel 2 im Zusammenwirken mit dem Anschlag 131 an dem Innenring 13 des Kopfstücks 1 begrenzt, jetzt verglichen mit den Anschlagflächen für die Schließbewegung durch die entgegengesetzten Anschlagflächen. Im Ausführungsbeispiel ist bei der Ausgestaltung des Anschlags 131 in der Form etwa eines Viertel-Teilrings der Drehwinkel der Spindel 2 auf 270° festgelegt. Der Rückhub des Ventilkolbens 3 läßt sich mittels einer Stellschraube und eines Anschlagstifts in der Spindel 2 auf unter 270° begrenzt. Es ist dann möglich, den Drehwinkel auch z.B. mit 180° oder 90° zu wählen und so den Volumenstrom nachträglich zu begrenzen.

Die dem Ventilsitz 62 zugewandte Stirnseite des Ventilkolbens 3 ist nach Art eines nicht durchbrochenen Tellers 33 ausgeführt. Der Teller 33 ist an seiner dem Ventilsitz 62 zugewandten Fläche ohne Dichtring ausgeführt. Zum Rand ist der Teller 33 mit einer umlaufenden Abschrägung versehen. Die Abschrägung ist aus strömungstechnischen Gründen vorgesehen: Die Geräuschbildung beim Öffnen und Schließen des Ventils wird minimiert.

**Patentansprüche**

1. Ventiloberteil für Armaturen, bei dem in einem Kopfstück (1) ein axial bewegbarer Ventilkolben (3) und eine drehbare Spindel (2) geführt sind, die über ein Gewinde (32;24) miteinander verbunden sind, bei dem zur Axialführung an dem Ventilkolben (3) und in dem Kopfstück (1) ineinandergreifende Vielkante (31;14) und zur Begrenzung der Axialbewegung ein Anschlag (27;131) vorgesehen sind, und bei dem von dem Kopfstück (1) ein Dichtring (42) gehalten ist, der über die dem Zulauf zugewandte Stirnseite des Kopfstücks (1) vorsteht und an der vorstehenden äußeren Stirnseite als Fläche für ihre ruhende Anlage an einem Ventilsitz (62) der Armatur (6) ausgebildet ist, dadurch gekennzeichnet, daß die axiale Bewegung des Ventilkolbens (3) von einem innen in dem Kopfstück (1) und von einem außen an der Spindel (2) in derselben Querschnittsebene angeordneten Anschlag (131; 27) in beiden Richtungen begrenzt ist, und daß der Innenvielkant (14) des Kopfstücks (1) und der Außenvielkant (31) des Ventilkolbens (3) von Zähnen gebildet ist, die in der Stirnansicht als gleichschenklige Dreiecke ausgebildet sind.

2. Ventiloberteil nach Anspruch 1, dadurch gekennzeichnet, daß im Abstand von der äußeren Stirnfläche des Kopfstücks (1) an dessen hohlzylindrische Innenfläche (19) ein radial nach innen vorspringender teilringförmiger Anschlag (131) angeformt ist.

3. Ventiloberteil nach den Ansprüchen 1 und 2, dadurch gekennzeichnet, daß an die Spindel (2) in der Ebene des teilringförmigen Anschlags (131) ein Steg (28) angeformt ist, von dem zumindest ein Ende den Umriß der Spindel (2) radial überragt und den zweiten Anschlag (27) bildet.

**4.** Ventiloberteil nach einem der Ansprüche 1 bis 3, dadurch gekennzeichnet, daß der Innenvielkant (14) in die hohlzylindrische Innenfläche (19) des Kopfstücks (1) auf der seiner äußeren Stirnseite abgewandten Seite des Anschlags (131) eingearbeitet ist.

**5.** Ventiloberteil nach Anspruch 4, dadurch gekennzeichnet, daß der Innenvielkant (14) von Zähnen (141) gebildet ist, die nur über einen Teil, vorzugsweise über ein Viertel, des Umfangs der hohlzylindrischen Innenfläche (19) eingearbeitet sind.

**6.** Ventiloberteil nach einem der Ansprüche 1 bis 5, dadurch gekennzeichnet, daß zwischen dem Vielkant (14) und dem Dichtring (42) in der Wandung des Kopfstücks (1) symmetrisch in derselben Querschnittsebene verteilt Fenster (17) ausgespart sind.

**7.** Ventiloberteil nach Anspruch 6, dadurch gekennzeichnet, daß jedes Fenster (17) von zwei Längsstegen (16) begrenzt ist, von denen jeder einen nach außen abnehmenden, etwa trapezförmigen Querschnitt mit abgerundeten, Innen- und Außendurchmesser der Wandung des Kopfstücks (1) entsprechenden Grundseiten aufweist.

## Claims

**1.** Valve upper part for fittings, wherein guided in a top piece (1) are an axially movable valve piston (3) and a rotatable spindle (2) which are connected to one another by a thread (32; 24), wherein meshing polyhedrons (31; 14) are provided on the valve piston (3) and in the top piece (1) for axial guidance and a stop (27; 131) is provided for delimiting the axial movement, and wherein the top piece (1) holds a sealing ring (42), which protrudes beyond the end face of the top piece (1) facing the inlet and at the protruding outer end face is designed as a surface for static application on a valve seat (62) of the fitting (6), characterized in that the axial movement of the valve piston (3) is delimited in both directions by stops (131; 27) disposed one inside the top piece (1) and one on the outside of the spindle (2) in the same cross-sectional plane, and that the inner polyhedron (14) of the top piece (1) and the outer polyhedron (31) of the valve piston (3) are formed by teeth which, in front elevation, take the form of equilateral triangles.

**2.** Valve upper part according to claim 1, characterized in that a radially inward-projecting, graduated ring-shaped stop (131) is formed at a distance from the outer end face of the top piece (1) on the latter's hollow-cylindrical inner surface (19).

**3.** Valve upper part according to claims 1 and 2, characterized in that formed on the spindle (2) in the plane of the graduated ring-shaped stop (131) is a web (28), at least one end of which projects radially beyond the contour of the spindle (2) and forms the second stop (27).

**4.** Valve upper part according to one of claims 1 to 3, characterized in that the inner polyhedron (14) is worked into the hollow-cylindrical inner surface (19) of the top piece (1) at the side of the stop (131) remote from the outer end face of the top piece.

**5.** Valve upper part according to claim 4, characterized in that the inner polyhedron (14) is formed by teeth (141) which are worked into the hollow-cylindrical inner surface (19) only over a part, preferably over a quarter, of the latter's periphery.

**6.** Valve upper part according to one of claims 1 to 5, characterized in that between the polyhedron (14) and the sealing ring (42) windows (17) are left open in the wall of the top piece (1), said windows being distributed symmetrically in the same cross-sectional plane.

**7.** Valve upper part according to claim 6, characterized in that each window (17) is delimited by two longitudinal webs (16), each of which has an outwardly reducing, substantially trapezoidal cross-section with rounded-off bottom sides corresponding to the inside and outside diameter of the wall of the top piece (1).

## Revendications

**1.** Tête de robinet pour des appareils de robinetterie dans laquelle un piston à robinet (3) mobile dans le sens axial et une broche tournante (2) reliés entre eux par l'intermédiaire d'un filetage (32; 24), sont guidés dans un élément de tête (1), dans laquelle sont prévus, sur le piston à robinet (3) et dans l'élément de tête (1), pour le guidage axial, des polyèdres (31; 14) qui s'emboîtent l'un dans l'autre et, pour la limitation du mouvement axial, une butée (27; 131), et dans laquelle l'élément de tête (1) porte un joint d'étanchéité (42) qui dépasse de la surface frontale de l'élément de tête (1) tournée vers l'arrivée et qui est réalisé sur la surface frontale extérieure en saillie, sous la forme d'une surface pour son application statique contre un siège de soupape (62) de l'appareil de robinetterie (6), **caractérisée en ce** que le mouvement axial du piston à robinet (3) est limité dans les deux sens par une butée (131; 27) disposée intérieurement dans l'élément de tête (1) et extérieurement sur la broche (2), dans le même plan de coupe, et que le polyèdre intérieur (14) de l'élément de tête (1) et le polyèdre extérieur (31) du piston à robinet (3) sont formés par des dents qui, dans la vue frontale, présentent la forme de triangles isocèles.

2. Tête de robinet selon la revendication 1, caracrérisée en ce que, à distance de la surface frontale extérieure de l'élément de tête (1), une butée (131) en forme de segment de bague dépassant radialement vers l'intérieur est conformée sur la surface intérieure (19) dudit élément de tête, en forme de cylindre creux.

3. Tête de robinet selon l'une des revendications 1 et 2, caractérisée en ce que sur la broche (2), dans le plan de la butée (131) en forme de segment de bague, est conformée une nervure (28) dont au moins une extrémité fait saillie par rapport au contour de la broche (2) et forme la seconde butée (27).

4. Tête de robinet selon l'une des revendications 1 à 3, caractérisée en ce que le polyèdre intérieur (14) est usiné dans la surface intérieure (19) en forme de cylindre creux de l'élément de tête (1), sur le côté de la butée (131) détourné de sa surface frontale extérieure.

5. Tête de robinet selon la revendication 4, caractérisée en ce que le polyèdre intérieur (14) est formé par des dents (141) qui ne s'étendent que sur une partie, de préférence sur un quart, de la circonférence de la surface intérieure (19) en forme de cylindre creux.

6. Tête de robinet selon l'une des revendications 1 à 5, caractérisée en ce qu'entre le polyèdre (14) et le joint d'étanchéité (42), des fenêtres (17) sont évidées dans la paroi de l'élément de tête (1) et réparties symétriquement dans le même plan transversal.

7. Tête de robinet selon la revendication 6, caractérisée en ce que chaque fenêtre (17) est délimitée par deux nervures longitudinales (16) dont chacune présente une section transversale sensiblement trapézoïdale qui diminue vers l'extérieur, avec des côtés de base arrondis correspondant aux diamètres intérieur et extérieur de la paroi de l'élément de tête (1).

# Fig.1

# Fig.2

a)

b)
(B-B)

c)

# Fig.3

31 32 3 36 35 36 33

# Fig.4

c)

b)

a)
(A-A)